# EUROPÄISCHE PATENTSCHRIFT

(11) **EP 1 403 306 B1**
(45) Veröffentlichungstag und Bekanntmachung des Hinweises auf die Patenterteilung: **06.07.2005**
(21) Anmeldenummer: 03018891.6
(22) Anmeldetag: 20.08.2003
(51) Int. Cl.: C08K 3/26, C08L 77/00, B60Q 1/00

(54) **Polyamid-Formmassen mit ultrafeinen Füllstoffen und daraus herstellbare Lichtreflektier-Bauteile**
Polyamide molding compounds having ultrafine fillers and light-reflecting components producible therefrom
Matières à mouler à base de polyamide comprenant des charges ultrafines et éléments réfléchissant la lumière produits avec ces matières

(30) Priorität: 06.09.2002 CH 15202002
(43) Veröffentlichungstag der Anmeldung: 31.03.2004
(73) Patentinhaber: EMS-Chemie AG, 7013 Domat/Ems (CH)
(72) Erfinder: Ebert, Martina, Dr., 7013 Domat/Ems (CH); Stöppelmann, Georg, Dr., 7402 Bonaduz (CH)
(74) Vertreter: OK pat AG

(56) Entgegenhaltungen:
- EP-A- 0 346 825
- EP-A- 0 585 056
- EP-A- 0 863 180
- EP-A- 0 913 421
- EP-A- 1 312 647
- DE-A- 4 408 277
- DE-A- 19 847 844
- GB-A- 969 991
- US-A- 5 389 712
- DATABASE WPI Section Ch, Week 199203 Derwent Publications Ltd., London, GB; Class A23, AN 1992-020295 XP002264664 & JP 03 269056 A (MITSUBISHI KASEI CORP) 29. November 1991 (1991-11-29)

## Beschreibung

Die Erfindung betrifft Polyamid-Formmassen entsprechend dem unabhängigen Anspruch 1 und daraus herstellbare Rohlinge und Lichtreflektier-Bauteile.

Thermoplastische Kunststoffe, aus denen durch Spritzgiessen und anschliessende Metallisierung (Vakuumbeschichtung, zumeist mit Aluminium) lichtreflektierende Bauteile hergestellt werden, sind bekannt. Solche Bauteile sind z.B. Scheinwerferreflektoren für Automobile. Neben den früher ausnahmslos verwendeten Paraboloid-Scheinwerfern wurden zwei hinsichtlich Lichtausnutzung und Platzbedarf optimierte Grundtypen entwickelt, die Projektions- (Ellipsoid, Polyellipsoid) und die Freiflächen-Scheinwerfer. Da die Abdeckscheiben insbesondere von Freiflächen-Scheinwerfern in Folge der optimierten Lichtausnutzung und -verteilung dieses Reflektortyps meist ohne Profilierung gestaltet werden können, sind heute Klarsichtscheiben aus Polycarbonat oder Glas im Einsatz. Dies erhöht die Anforderungen an die Oberflächengüte der von aussen gut sichtbaren Elemente (z.B. Reflektor, Subreflektor, Blendrahmen), wobei die Dimensionsbeständigkeit in der Wärme, die mechanische Festigkeit, eine einfache Verarbeitung und geringe Fertigungstoleranzen weiterhin wichtig sind.

Solche Scheinwerferreflektoren können auch in den eigentlichen, im Wesentlichen eine Paraboloidform aufweisenden Reflektor und einen mehr oder weniger von der Paraboloidform abweichenden Subreflektor unterteilt werden. Der Reflektor ist das eigentliche, das Licht zur gewünschten Beleuchtung gezielt reflektierende Bauteil, das normalerweise in unmittelbarer Umgebung der das Licht erzeugenden Glühlampe angeordnet ist. Die Lampe erzeugt neben dem Licht auch Wärme, so dass der Reflektor je nach Konstruktion einer Betriebstemperatur von etwa 180-210 °C ausgesetzt ist. Für Spitzentemperaturen von über 220 °C oder wenn die optischen Anforderungen nicht so gross sind, kommt erfahrungsgemäss nur Blech als Reflektormaterial zum Einsatz.

Subreflektor wird der weiter von der Lichtquelle entfernte Teil der lichtreflektierenden Bauteile genannt. Subreflektoren decken oft den Bereich zwischen dem Reflektor und dem Lampengehäuse bzw. der übrigen Karosserie oder auch der durchsichtigen Lampenabdeckung ab. Subreflektoren müssen deshalb keine Paraboloid-Fortsetzung sein welche der Erhöhung der Lichtausbeute dienen, sie können viel mehr eine ästhetische Aufgabe erfüllen, indem sie eine reflektierende Oberfläche darstellen, die den Reflektor gestalterisch vergrössert. Durch den grösseren Abstand von der Lichtquelle ist für Subreflektoren mit einer Betriebstemperatur von maximal etwa 150 °C zu rechnen.

Metallschichten, die zur Verbesserung der Reflexion auf die Oberflächen der Reflektoren und zum Erzeugen eines gestalterischen Eindrucks auf die Subreflektoren aufgebracht werden, sind keiner direkten mechanischen Beanspruchung, wie z.B. Abrasion ausgesetzt. Trotzdem ist eine gute Haftfähigkeit der Metallschicht auf den Reflektor- und Subreflektorflächen wichtig, da Blasenbildungen oder gar Abblättern die Lichtausbeute beeinträchtigen und den gestalterischen Eindruck verschlechtern würden. Im Folgenden sind mit dem Ausdruck "Reflektor" immer auch Subreflektoren gemeint, wenn nicht ausdrücklich zwischen den Reflektoren und Subreflektoren unterschieden wird.

Die Metallisierung der Reflektoren wird üblicherweise im Vakuum mittels Bedampfen mit PVD-Methoden (PVD = physical vapour deposition, z.B. Aufdampfen oder Sputtern von z.B. Aluminium) und/oder CVD-Methoden (CVD = chemical vapour deposition, wie z.B. plasma-unterstützte CVD) ausgeführt. Ein wichtige Anforderung an den Kunststoff ist deshalb eine geringe Ausgasrate unter den entsprechenden Vakuum- und Temperaturbedingungen. Damit die Metallschichten der Reflektoren im Betrieb nicht beschädigt werden, darf auch bei den genannten, hohen Betriebstemperaturen kein erhöhtes Ausgasen stattfinden. Zudem sollten die Reflektoren in einem Temperaturbereich von -50 °C bis 220 °C formstabil sein, d.h. das Ausdehnungs- und Schwindungsverhalten muss möglichst isotrop sein, damit - zumindest bei den Reflektoren - die Lichtausbeute bzw. Lichtbündelung nicht beeinträchtigt wird. Bevorzugt weisen die Metallschichten ein im Wesentlichen gleiches Ausdehnungs- und Schwindungsverhalten wie die Reflektoren auf, so dass die Zug- bzw. Schubbeanspruchung der Reflexionsschichten möglichst klein ist. Dadurch wird zusätzlich die Gefahr einer Rissbildung oder Stauchung in den Reflexionsschichten reduziert.

Eine weitere Anforderung betrifft die Oberflächengüte der zu beschichtenden (meist gekrümmten) Kunststoffoberfläche. Speziell bei Reflektoren, bei welchen die Lichtausbeute essentiell ist, muss eine möglichst homogene, glatte, hochglänzende Oberflache für die Beschichtung bereitgestellt werden. Schlecht fliessende oder zu früh erstarrende Kunststoffe bzw. eine Zugabe von Füllstoffen führen in der Spritzgussform oft zu einem rauhen, matten oder unregelmässigen Abdruck, gemessen an den extrem hohen Anforderungen einer spiegelglatten Oberfläche, selbst wenn die entsprechende Oberfläche des formgebenden Werkzeugs hochglanzpoliert ist.

Bisher wurden zum Herstellen von Reflektoren zumeist Duroplaste, seltener auch Thermoplaste eingesetzt. Von den letzteren weisen die hauptsächlich verwendeten, amorphen Thermoplaste, z.B. Polyetherimid (PEI) oder Polyethersulfone (PES bzw. PSU oder PPSU), eine hohe Glasubergangstemperatur (Tg) auf. Diese amorphen Hoch-Tg-Thermoplaste (HT-Thermoplaste) können ohne Füllstoffe zum Erzeugen von Reflektor-Rohlingen mit einer hervorragenden Oberflächenglatte verwendet werden. Die Reflektor-Rohlinge können direkt metallisiert werden. Nachteilig für eine Massenproduktion ist allerdings der hohe Preis dieser amorphen HT-Thermoplaste. In der Beleuchtungseinheit treten naturgemäss die höchsten Temperaturen auf. Daher wurden bisher die Reflektoren entweder aus Blech oder metallisierten Spritzgussteilen aus Duroplast (BMC) oder amorphen HT-Thermoplasten (PC-HT, PEI, PSU, PES) hergestellt. Die hohen Toleranzanforderungen, gekoppelt mit der für die Metallisierung erforderlichen Oberflächengüte der Spritzgussteile wurden bisher nur von ungefüllten amorphen HT-Thermoplasten oder lackierten Duroplasten erfüllt, so dass der Einsatz von teilkristallinen Werkstoffen allgemein ausgeschlossen wird.

Durch die Einführung der Klarglaslinsen, die auf dem europäischen Markt in dem überwiegenden Teil neuer Kraftfahrzeugmodelle eingesetzt werden, haben die Blendrahmen oder Subreflektoren eine grosse Bedeutung erlangt, diese werden zumeist vollständig metallisiert. Neben der Basisfunktion der Blendrahmen als Bestandteil des Hauptscheinwerfers zur Anpassung an Kotflügel- bzw. Motorhauben-Geometrien und beleuchtungstechnischer Funktionen, treten vor allem stilistische Merkmale zunehmend in den Vordergrund. Wesentliche Anforderungen an den Blendrahmen sind (ähnlich wie bei den Reflektoren) die leichte Verarbeitbarkeit, hervorragende Oberflächengüte, leichte Metallisierbarkeit, Beständigkeit gegenüber Umwelteinflüssen und Feuchtigkeit, Temperaturbeständigkeit und Dimensionsstabilität. Über diese traditionellen Funktionen hinaus werden zunehmend weitere Funktionseinheiten, beispielsweise Reflektoren für Seitenblinker, in den Blendrahmen bzw. den Subreflektor integriert. Um diesem Anforderungsprofil gerecht zu werden, wurde bisher eine breite Palette ausgehend von technischen Kunststoffen über Polymerblends bis zu HT-Thermoplasten eingesetzt. Beispiele sind Polyamid, Polycarbonat, Polysulfon (nicht aber Polyolefine) sowie Blends auf der Basis von und PC, insbesondere aber von PBT. Zur Lösung spezieller thermischer Anforderungen kommen HT-Thermoplaste (Irisiertemperatur bis 212 °C für Ultrason E von BASF Ludwigshafen, Deutschland), deren Verwendung ist aber aus ökonomischen Gründen limitiert. Im Zuge der fortschreitenden Komplexizitätsreduzierung findet zur Zeit eine zunehmende Integration von Scheinwerferkomponenten zu hoch entwickelten Beleuchtungssystemen statt, die höhere Materialanforderungen erwarten lassen [J. Queisser, M. Geprägs, R. Blum und G. Ickes, Trends bei Automobilscheinwerfern, *Kunststoffe* 3/2002, Hanser Verlag, München].

Sehr hohe Wärmeformbeständigkeit weist auch das teilkristalline Polyphenylensulfid (PPS) auf, das z.B. in EP 0 332 122 zur Herstellung von Scheinwerferreflektoren erwähnt ist. Dort ist ein Herstellungsverfahren offenbart, bei welchem in einem ersten Arbeitsschritt ein Reflektor-Rohling (unter Zusatz von maximal 25 % Russ zum Erzielen einer erhöhten elektrischen Leitfähigkeit) spritzgegossen wird. In einem zweiten Arbeitsschritt wird der Reflektor-Rohling, zum Ausgleichen von Unebenheiten und zur Erzielung einer glänzenden Oberfläche, elektrostatisch lackiert und in einem dritten Arbeitsschritt im Vakuum aluminisiert. Dieses Verfahren wird, wegen des zusätzlichen Lackierschrittes, allgemein als zu kompliziert und zu kostenintensiv für die Massenproduktion von Reflektoren betrachtet. Zudem ist als nachteilig bekannt, dass die Zugabe von Füllstoffen die Fliessfähigkeit einer Spritzgussmasse erniedrigt und die Oberflächen der so produzierten Rohlinge aufrauht.

Aus EP 0 696 304 sind Zusammensetzungen bekannt, welche (a) ein erstes Polyamid, hergestellt aus einer aromatischen Carbonsäurekomponente (Isophthalsäure bzw. Terephthalsäure) einer aliphatischen Diaminkomponente (Hexamethylendiamin und 2-Methyl-1,5-pentamethylendiamin); (b) ein sich vom ersten Polyamid unterscheidendes, zweites, aliphatisches (Polyamid 66, Polyamid 6 oder Polyamid 46) oder teilaromatisches Polyamid; und (c) einen mineralischen Füllstoff (Kaolin, Talk, Glimmer oder Wollastonit) umfassen. Aus EP 0 696 304 geht hervor, dass entsprechende Zusammensetzungen mit einem hohen Füllanteil an Kaolin oder Glimmer (mindestens 40 %) einen HDT/A-Wert von über 200 °C erreichen können, dass aber nur in den Fällen eine glanzende Oberfläche beobachtet wird, in denen die Zusammensetzung ausserdem noch 10 % Glasfasern umfasst. Die Beigabe solcher Glasfasern beeinträchtigt aber ebenfalls die Fliessfahigkeit der Zusammensetzung beim Spritzgiessen von Formteilen und führt zu einer unebenen Oberfläche sowie zu einem weniger isotropen bzw. stärker anisotropen Schwindungsverhalten.

Aus JP 11 279 289 und JP 11 303 678 sind Zusammensetzungen bekannt, welche granuläre metallische Füllstoffe, die Al, Ni, Sn, Cu, Fe, Au, Ag, Pt, oder Legierungen wie z.B. Messing oder rostfreien Stahl (besonders bevorzugt aber Al) umfassen und aus denen sich Formteile mit einer metallfarbigen Oberfläche herstellen lassen. Der metallische Eindruck der Oberfläche eines entsprechenden Formteils wird entscheidend durch die Korngrösse der Metallpartikel bestimmt, deren nützlicher mittlerer Durchmesser zwischen 10 µm und 200 µm liegen soll. Wenn möglich sollte aber aus Gründen der einfacheren Wiedergewinnung bzw. Rückführung des Materials in die Herstellung von neuen Bauteilen auf die Verwendung von solchen partikulären Metallzugaben verzichtet werden.

Unter dem Namen Minlon® (E.I. du Pont de Nemours & Co., Wilmington, USA) ist ein Material zur Herstellung von Strassenbeleuchtungsreflektoren bekannt. Bei dem genannten Produkt handelt es sich um Nylon 66 (PA 66), welches neben einem Hitzestabilisator auch 36-40 % klassische Mineralstoffe umfasst. Allerdings erscheint dieses Material von der Oberflächengüte her für Fahrzeugfahrbeleuchtungen nicht geeignet.

Aus DE 198 47 844 sind Folienanwendungen bekannt, bei welchen einem kristallisierbaren Polymer maximal 1 % an nanoskaligen Füllstoffen als Nukleierungsmittel zum Verfeinern der Kristallisation und dadurch zum Verbessern der Folieneigenschaften beigegeben werden. So wurden Formteile mit hoher Steifigkeit, Härte, Abriebfestigkeit und Zähigkeit bzw. Folien mit guter Transparenz und hohem Glanz erzielt.

Die Aufgabe der vorliegenden Erfindung besteht darin, ein alternatives Material vorzuschlagen, mit welchem spritzgegossene Reflektoren mit zumindest annähernd gleich guter Oberfläche (die für die direkte Beschichtung mit einer Metallschicht geeignet ist) und zumindest annähernd gleich guter Wärmeformbeständigkeit hergestellt werden können, wie mit aus dem Stand der Technik bekannten Materialien.

Diese Aufgabe wird durch die Merkmale des unabhängigen Anspruchs 1 gelöst. Bevorzugte Ausführungsformen und weitere Merkmale ergeben sich aus den abhängigen Ansprüchen.

Das erfindungsgemässe Material ist eine Polyamid-Formmasse mit einem teilkristallinen Polyamid und einem mineralischen Füllstoff, wobei der mineralische Füllstoff eine ultrafeine Körnung mit einer mittleren Partikelgrösse von maximal 100 nm aufweist. Unter dem Begriff Polyamid werden Homopolyamide, Copolyamide und Mischungen aus Homopolyamiden und/oder Copolyamiden verstanden.

Die bevorzugten teilaromatischen Copolyamide basieren auf den Monomeren Hexamethylendiamin und aromatischen Dicarbonsäuren. Besonders bevorzugt ist ein teilaromatisches Copolyamid auf der Basis von Hexamethylendiamin sowie Terephthalsäure und Isophthalsäure im Verhältnis 70/30 (d.h. ein entsprechendes PA 6T/6I). Der bevorzugte mineralische Füllstoff für die teilaromatischen Copolyamide ist ultrafeine Kreide (CaCO₃), wobei die Polyamid-Formmasse bevorzugt maximal 40 Gew.% davon umfasst. Die ultrafeine Kreide weist vorzugsweise eine mittlere Partikelgrösse von maximal 90 nm, bevorzugt eine mittlere Partikelgrösse von maximal 80 nm und speziell bevorzugt eine mittlere Partikelgrösse von 70 nm auf.

Aus EP 0 940 430 sind zwar Polyamid-Nanocomposites mit guter Wärmeformbeständigkeit bekannt. Die Verwendung dieser Polyamidzusammensetzung für Gehause oder mechanische Teile in der Elektrik oder Elektronik (z.B. Schalter oder Stecker), Aussen- oder Innenteile an Automobilen sowie Getriebe- oder Lagergehäuse im Maschinenbau ist offenbart. Aus diesem Dokument geht keine spezifische Verwendung für direkt beschichtete Reflektoren in Automobilen hervor. Zudem gibt EP 0 940 430 keine Hinweise auf so wesentliche Parameter wie Glanz oder Irisiertemperatur.

Aus den Polyamid-Formmassen der vorliegenden Erfindung lassen sich jedoch trotz des Füllstoffanteils Rohlinge spritzgiessen, die in dem Bereich, wo die Werkzeugform hochglanzpoliert war, sich durch eine glatte Oberfläche mit hohem Glanz auszeichnen. Dies ist umso erstaunlicher, weil im Vergleich zu den amorphen, ungefüllten Hoch-Tg-Thermoplasten sowohl die Kristallisation bei der Erstarrung der Formmasse als auch der Füllstoff die Fliessfähigkeit und Abdruckgenauigkeit der Formmasse reduzieren. Besonders geeignet sind solche Rohlinge für die direkte Metallisierung (z.B. mittels PVD-Methoden) und Verwendung als Reflektoren.

Die erfindungsgemässen Polyamid-Formmassen (Beispiele 1 und 2) wurden auf einem 30 mm-Doppelschneckenextruder ZSK 25 der Firma Werner&Pfleiderer bei Temperaturen zwischen 320 °C und 340 °C hergestellt. Dabei wurden das Polyamid in den Einzug und die Mineralien separat in den Einzug dosiert. Als Mineral wurde ultrafeines, nicht beschichtetes, gefalltes Kalziumkarbonat mit dem Produktnahmen "SOCAL® U1" (Solvay Chemicals S.A.) in Form von würfelformigen Partikeln mit einer mittleren Grösse von 70 nm verwendet.

In den Vergleichsbeispielen 3 bis 6 wurden die folgenden, nicht erfindungsgemässen Mineralien eingesetzt:

| | |
|---|---|
| CaCO₃ Typ 2 | Natürliches, gemahlenes CaCO₃ mit einem mittleren Teilchendurchmesser von 3 µm, einer Dichte von 2.7 g/cm³ sowie einem pH-Wert 9 und einem Weissgrad nach DIN 53163 von 90 %. |
| CaCO₃ Typ 3 | Gefalltes CaCO₃, fein mit einem mittleren Teilchendurchmesser von 0.2 µm, einer spezifischen Oberfläche von 11 m²/g, einer Dichte von 2.9 g/cm³ und einem pH Wert 10. |
| Kaolin | Kalziniertes, mit Aminosilan behandeltes Kaolin mit einem mittleren Teilchendurchmesser von 1.3 µm, einer Dichte von 2.6 g/cm³ und einem pH-Wert 9. |

Die Prüfung der erfindungsgemässen und nicht erfindungsgemässen Formmassen (vgl. Tabelle 1) wurden gemäss folgenden Vorschriften durchgeführt:
- Dichte nach ISO 1183
- Zug-E-Modul nach ISO 527
- HDT A, B und C nach ISO 75

Zur Beurteilung der Oberflächengüte der erfindungsgemässen Formmassen wurden Platten in hochglanzpolierten Spritzgussformen bei einer Massetemperatur von 340 °C, Werkzeugtemperatur 140 °C und Einspritzgeschwindigkeit 30 mm/s hergestellt und diese anschliessend visuell beurteilt.

**Tabelle 1**

| | | | Beispiel 1 | Beispiel 2 | Vergleichsbeispiel | | | |
|---|---|---|---|---|---|---|---|---|
| | | | | | 3 | 4 | 5 | 6 |
| PA 6T/6I (70/30%) | | Gew.% | 70 | 60 | 100 | 80 | 80 | 60 |
| CaCO₃Typ 1 (ultrafeine Kreide) | Teilchengrosse 70 nm | Gew.% | 30 | 40 | | | | |
| CaCO₃ Typ 2 | | Gew.% | | | | 20 | | |
| CaCO₃ Typ 3 | | Gew.% | | | | | 20 | |
| Kaolin | | Gew.% | | | | | | 40 |
| Dichte | trocken | g/cm³ | 1.44 | 1.53 | 1.21 | | | 1.55 |
| Zug-E-Modul, 23°C | trocken | MPa | 5500 | 6500 | 4050 | | | 7500 |
| Zug-E-Modul, 150°C | trocken | MPa | 1250 | | 600 | | | |
| HDT A (1.8 MPa) | trocken | °C | 140 | 140 | 130 | | | 145 |
| HDT B (0.45 MPa) | trocken | °C | 240 | | | | | 255 |
| HDT C (8 MPa) | trocken | °C | 120 | 120 | 115 | | | 115 |
| Oberflachengute | | - | sehr gut | sehr gut | gut | schlecht | gut | schlecht |

Erfindungsgemässe Rohlinge auf der Basis von teilkristallinen, teilaromatischen Copolyamiden sind auf Grund ihrer hohen Wärmeformbeständigkeit (hoher HDT/A-Wert und hohe Schmelztemperatur) geeignet für den Einsatz als echte Reflektoren im heissen Bereich von Fahrzeugfahrbeleuchtungen, d.h. z.B. als Reflektoren in Automobil-Scheinwerfern oder in Scheinwerfern anderer Fahrzeuge.

Auch für die Produktion von Reflektoren für andere (z.B. stationäre) Lichtanlagen kommen solche Rohlinge in Betracht. Diese erstaunliche Eignung (in Anbetracht des bisherigen Standes der Technik) drückt sich am besten aus durch eine Irisiertemperatur, die vorzugsweise bei über 220 °C liegt. Gemäss der eingangs zitierten Zeitschrift *Kunststoffe* beträgt die höchste Irisiertemperatur, über die bisher berichtet wurde, 212 °C. Die Irisiertemperatur charakterisiert bekanntlich bei stufenweiser Erhöhung der Temperatur denjenigen Wert, bei dem die Reflektorschicht zu schillern beginnt, was durch einen mechanischen Verzug zwischen dem Polymeruntergrund und der Metallbeschichtung infolge der unterschiedlichen Wärmeausdehnung dieser Werkstoffe hervorgerufen wird. An einem erfindungsgemäss hergestellten Reflektor auf der Basis eines PA 6T/6I (70/30) wurde eine Irisiertemperatur von ca. 240 °C gemessen. Die Polyamid-Formmasse enthielt dabei 30 Gew.% ultrafeine Kreide mit einer mittleren Partikelgrosse von 70 nm. Für beide Reflektor-Temperaturbereiche, insbesondere jedoch für den heissen Bereich von Fahrzeugfahrbeleuchtungen, können mit den erfindungsgemassen Polyamid-Formmassen wirtschaftliche Losungen als Ersatz für teurere Werkstoffe zur Verfügung gestellt werden.

Es soll noch angemerkt werden, dass die Polyamid-Formmassen über den erfindungsgemässen Füllstoff hinaus auch noch übliche Additive, wie z.B. Stabilisatoren (unterschiedlicher Art), Flammschutzmittel, Verarbeitungshilfsmittel, Antistatikmittel und weitere Zusatzstoffe enthalten können. So enthielten die Polyamid-Formmassen aller genannten Beispiele jeweils einen Hitzestabilisator.

Als Verfahren zum Herstellen der Polyamid-Formmassen ist die Zumischung des mineralischen Füllstoffs zum Polyamid in einem Doppelschneckenextruder bevorzugt (Compoundierung). An Stelle eines einzigen Polyamidtyps ist auch der Einsatz eines Polyamid-Blends möglich. Die erfindungsgemässen Polyamid-Formmassen werden bevorzugt zum Spritzgiessen von Reflektoren (bzw. Subreflektoren) verwendet. Zum Erhalt von besonders präzisen Reflektoroberflächen kann beim Spritzgiessen in einer Spezialversion die Gasinnendrucktechnik (siehe z.B. in *PLASTVERARBEITER*, 5/2002, erschienen im Hüthig Verlag, D-69121 Heidelberg) eingesetzt werden.

## Patentansprüche

1. Polyamid-Formmasse mit einem teilkristallinen Polyamid, welche teilaromatische Copolyamide und klassische mineralische Füllstoffe umfasst, **dadurch gekennzeichnet, dass** der mineralische Füllstoff ultrafeine Kreide (CaCO₃) ist und eine mittlere Partikelgrösse von maximal 100 nm aufweist, und die Formmasse zum Spritzgiessen von Lichtreflektier-Bauteilen geeignet ist.

2. Polyamid-Formmasse nach Anspruch 1, **dadurch gekennzeichnet, dass** sie maximal 40 Gew.% an ultrafeiner Kreide umfasst.

3. Polyamid-Formmasse nach Anspruch 1 oder 2, **dadurch gekennzeichnet, dass** die ultrafeine Kreide eine mittlere Partikelgrösse von maximal 90 nm, bevorzugt eine mittlere Partikelgrösse von maximal 80 nm und speziell bevorzugt eine mittlere Partikelgrösse von 70 nm, aufweist.

4. Polyamid-Formmasse nach einem der vorhergehenden Ansprüche, **dadurch gekennzeichnet, dass** die teilaromatischen Copolyamide auf den Monomeren Hexamethylendiamin und aromatischen Dicarbonsäuren basieren.

5. Polyamid-Formmasse nach Anspruch 4, **dadurch gekennzeichnet, dass** die aromatischen Dicarbonsäuren Terephthalsäure und Isophthalsäure im Verhältnis 70/30 umfassen.

6. Rohling aus einer spritzgegossenen Polyamid-Formmasse nach einem oder mehreren der Ansprüche 1 bis 5, **dadurch gekennzeichnet, dass** er eine durch eine hochglanzpolierte Werkzeugform erzeugte glatte Oberfläche mit hohem Glanz umfasst.

7. Reflektor für Fahrzeugfahrbeleuchtungen, Signal- oder Strassenleuchten bzw. Subreflektor für Fahrzeugfahrbeleuchtungen, **dadurch gekennzeichnet, dass** er einen Rohling nach Anspruch 6 umfasst und direkt metallisiert ist.

8. Reflektor bzw. Subreflektor nach Anspruch 7 , **dadurch gekennzeichnet, dass** die Metallschicht durch PVD-Methoden aufgebracht ist und die Irisiertemperatur bei einem Wert liegt, der hoher als 220 °C ist.

9. Verfahren zum Herstellen einer Polyamid-Formmasse mit einem teilkristallinen Polyamid, welche teilaromatische Copolyamide und klassische mineralische Füllstoffe umfasst, **dadurch gekennzeichnet, dass** der mineralische Füllstoff ultrafeine Kreide (CaCO₃) ist, eine mittlere Partikelgrösse von maximal 100 nm aufweist und mittels einem Doppelschneckenextruder dem Polyamid zugemischt wird.

10. Verfahren nach Anspruch 9, **dadurch gekennzeichnet, dass** das Polyamid und maximal 40 Gew.% an ultrafeiner Kreide jeweils separat in den Einzug des Doppelschneckenextruders dosiert werden.

11. Verwendung einer Polyamid-Formmasse gemäss einem der Ansprüche 1 bis 5 zum Spritzgiessen von Reflektoren bzw. Subreflektoren für Fahrzeugfahrbeleuchtungen oder von Reflektoren von Signal- oder Strassenleuchten.

12. Verwendung einer Polyamid-Formmasse gemäss Anspruch 11, **dadurch gekennzeichnet, dass** beim Spritzgiessen die Gasinnendrucktechnik eingesetzt wird.

## Claims

1. Polyamide moulding compound with a partly crystalline polyamide, comprising partly aromatic copolyamides and classic mineral fillers, **characterized in that** the mineral filler is ultrafine chalk (CaCO₃) and displays an average particle size of maximal 100 nm and the moulding compound is suitable for injection-moulding of light-reflecting components.

2. Polyamide moulding compound according to Claim 1, **characterized in that** it contains at most 40% by weight of ultrafine chalk.

3. Polyamide moulding compounds according to Claim 1 or 2, **characterized in that** the ultrafine chalk displays an average grain size of maximal 90 nm, preferably displaying an average grain size of maximal 80 nm and by special preference displaying an average grain size of 70 nm.

4. Polyamide moulding compound according to one of the above Claims, **characterized in that** the partly aromatic copolyamides are based on the monomers hexamethylenediamine and aromatic dicarbonic acids.

5. Polyamide moulding compound according to Claim 4, **characterized in that** the aromatic dicarbonic acids comprise terephthalic acid and isophthalic acid in the proportion 70/30.

6. Blanks made from an injection-moulded polyamide moulding compound according to one or several of Claims 1 to 5, **characterized in that** it comprises a smooth surface with high gloss generated by a highly polished injection die.

7. Reflector for motor vehicle driving lights, signalling or street lights or subreflectors for motor vehicle driving lights, **characterized in that** it comprises a blank according to Claim 6 and is directly metallized.

8. Reflector or subreflector according to Claim 7, **characterized in that** the metallic coating is applied by PVD methods and the value of its iridescence temperature is greater than 220°C.

9. Procedure for manufacture of a polyamide moulding compound with a partly crystalline polyamide that comprises partly aromatic copolyamides and classic mineral fillers, **characterized in that** the mineral filler is ultrafine chalk (CaCO₃), displays an average particle size of maximal 100 nm and is mixed with the polyamide by means of a twin-screw extruder.

10. Procedure according to Claim 9, **characterized in that** the polyamide and at most 40% by weight of ultrafine chalk are metered separately and introduced into the intake of the twin-screw extruder.

11. Use of a polyamide moulding compound according to one of Claims 1 to 5 for injection-moulding of reflectors or subreflectors for motor vehicle driving lights or for reflectors for signalling or street lights.

12. Use of a polyamide moulding compound according to Claim 11, **characterized in that** the internal gas pressure technique is employed in the injection-moulding process.

## Revendications

1. Matière à mouler de polyamide comportant un polyamide semi-cristallin, qui comprend des copolyamides semi-aromatiques et des charges minérales classiques, **caractérisée en ce que** la charge minérale est de la craie ultrafine (CaCO₃) et présente une taille moyenne de particules de 100 nm au maximum, et **en ce que** la matière à mouler est appropriée pour un moulage par injection de pièces réfléchissant la lumière.

2. Matière à mouler de polyamide selon la revendication 1, **caractérisée en ce qu'**elle comprend au maximum 40 % en masse de craie ultrafine.

3. Matière à mouler de polyamide selon la revendication 1 ou 2, **caractérisée en ce que** la craie ultrafine présente une taille moyenne de particules au maximum de 90 nm, de préférence une taille moyenne de particules de 80 nm au maximum et de façon particulièrement préférée une taille moyenne de particules de 70 nm.

4. Matière à mouler de polyamide selon l'une des revendications précédentes, **caractérisée en ce que** les copolyamides semi-aromatiques sont à base de monomères d'hexaméthylènediamine et d'acides dicarboxyliques aromatiques.

5. Matière à mouler de polyamide selon la revendication 4, **caractérisée en ce que** les acides dicarboxyliques aromatiques comprennent de l'acide téréphtalique et de l'acide isophtalique selon un rapport de 70/30.

6. Ébauche à partir d'une matière à mouler de polyamide moulée par injection selon l'une ou plusieurs des revendications 1 à 5, **caractérisée en ce qu'**elle comprend une surface lisse présentant une brillance élevée, générée par un moule poli très brillant.

7. Réflecteur pour éclairages de conduite pour véhicule, lampes de signalisation ou éclairage public ou sous-réflecteur pour éclairages de conduite pour véhicule, **caractérisé en ce qu'**il comprend une ébauche selon la revendication 6 et est directement métallisé.

8. Réflecteur ou sous-réflecteur selon la revendication 7, **caractérisé en ce que** la couche métallique est appliquée par un procédé PVD et que la température d'irisation a une valeur qui est supérieure à 220 °C.

9. Procédé de fabrication d'une matière à mouler de polyamide comportant un polyamide semi-cristallin, qui comprend des copolyamides semi-aromatiques et des charges minérales classiques, **caractérisé en ce que** la charge minérale est de la craie ultrafine (CaCO₃), qu'elle présente une taille moyenne de particules de 100 nm au maximum et est ajoutée en mélange au polyamide dans une extrudeuse double vis.

10. Procédé selon la revendication 9, **caractérisé en ce que** le polyamide et au maximum 40 % en masse de craie ultrafine sont dosés séparément dans la zone d'amenée de l'extrudeuse double vis.

11. Utilisation d'une matière à mouler de polyamide selon l'une des revendications 1 à 5 pour mouler par injection des réflecteurs ou des sous-réflecteurs pour éclairages de conduite pour automobile ou des réflecteurs pour éclairages de signalisation ou éclairage public.

12. Utilisation d'une matière à mouler de polyamide selon la revendication 11, **caractérisée en ce que** l'on utilise lors du moulage par injection la technique à pression interne de gaz.
